# EUROPEAN PATENT SPECIFICATION

(11) **EP 1 908 344 B1**
(45) Date of publication and mention of the grant of the patent: **27.03.2013**
(21) Application number: 07117344.7
(22) Date of filing: 27.09.2007
(51) Int. Cl.: A01G 23/083, A01G 23/099

(54) **Working machine system with equipment for felling a tree to be processed**
Arbeitsmaschinensystem mit Ausrüstung zur Fällung eines weiterzuverarbeitenden Baums
Système de machine de travail avec un équipement pour abattre un arbre à traiter

(30) Priority: 06.10.2006 FI 20065646
(43) Date of publication of application: 09.04.2008
(73) Proprietor: Nokka-Yhtiöt OY, 40951 Muurame (FI)
(72) Inventor: Nokkala, Jorma, 40950 Muurame (FI)
(74) Representative: LEITZINGER OY

(56) References cited:
- WO-A-98/44779
- WO-A-2005/043983
- DE-U1- 29 910 859
- FR-A- 2 819 212
- US-A- 4 219 057
- US-A- 4 398 581
- US-A- 4 552 191
- US-A- 6 135 175

## Description

The present invention relates to a working machine system, including equipment for felling a tree to be processed, equipment for delimbing branches of the tree, and wherein the equipment for felling the tree are also equipment for cutting the tree trunk to a desired length and the working machine system includes equipment for producing chopped wood, said equipment including means for splitting a trunk of the felled tree in a longitudinal direction of the tree.

The effort to break away from fossil fuels and the shifting of focus on biofuels based on renewable natural resources raise new interest in the burning of wood. In terms of wood-based materials used in heating, the strongest growth of demand has developed for chips, pellets and briquettes, the use of which in thermal power facilities and, in the case of pellets in single-family houses as well, is feasible for high-level automation. However, the use of traditional chopped wood or pieces of firewood is also on the rise, because most single-family houses are furnished with some sort of wood-burning furnaces with heat storage capability. The increasing amount of leisure time also increases possibilities of using chopped wood for heating.

Forests, both in Finland and abroad, offer plentiful of timber suitable for the raw material of chopped wood, the clearing of which for practical use generally improves growing conditions for the remaining tree population. However, the harvest of timber from thinning for practical use as chopped wood has thus far been physically strenuous logger's work, which has decreased the utilization of thinning timber and increased the price of chopped wood obtained therefrom. This is why the raw material presently used for chopped wood comprises often more heavy-duty timber, which complies with the standards of pulpwood and which can be logged from woodland by means of a conventional harvester intended for thinning or final cutting. This trend is not prudent in terms of overall economy even if, for the time being, it may be found reasonable in terms of private economy.

It is an object of the invention to create a comprehensive mechanized solution for the production of chopped wood, such that the physical strain of work is substantially reduced throughout the chain from logging to final chopped wood. At the same time, the productivity of work is also upgraded, which improves the competitiveness of chopped wood in the market of biofuels used for heating

The raw materials used for chopped wood comprise usually either brushwood logged from thinned patches of woodland and delimbed in the forest, or more heavy-duty trees cut to pulpwood standard and delimbed. The use of brushwood is common when producing chopped wood mostly for private use or in small scale. More heavy-duty timber is mainly used as a raw material by occupational chopped-wood producers. In terms of mechanization, the chopped-wood producing processes are usually essentially different from each other in these two alternatives.

There is no exact definition for brushwood, but in practice this type of round timber is limited to well under 20 cm in diameter, nor are the pieces of brushwood often cut to standard length.

As for pulpwood, the diameter can be quite large indeed, and most commonly the cutting is currently effected to the length of 3 m. Hence, it is obvious that there are differences in chopped-wood producing processes between these two alternative raw materials, at least in terms of handling the timber. Brushwood can often be handled with manual effort, but the handling of pulpwood is performed by means of mechanical power.

The procurement of brushwood material from forest for further processing originates usually from the felling of a tree by means of a chain or clearing saw. This is followed by delimbing the felled tree by means of the chain saw and possibly by cutting it to appropriate lengths. The pieces of brushwood are usually gathered by manual effort into heaps and then carried out of the forest by means of a grab-loader equipped, forest-going vehicle, such as e.g. a forest-outfitted tractor, a small load-carrying forest tractor or a recently more and more popular trailer-pulling "buggy", which is mostly used for recreational activities. The pieces of brushwood are not transported with branches from the forest, because the space claimed by branches would represent a major reduction of payload.

The beginning of a chopped-wood process based on more heavy-duty timber is marked by a forest-going harvester felling and delimbing the timber. In addition, the harvester usually cuts the trunks to a length of about 3 m and measures the processed volume.

Timber is usually carried from the forest to an intermediate storage by means of a so-called haulage machine, i.e. a load-carrying, quite heavy-duty forest tractor. From the intermediate storage, the timber, intended for the raw material of chopped wood, is shipped by an appropriate vehicle to a chopped-wood production site. The vehicle must be equipped with a grab loader.

In the brushwood using method, the stems of brushwood are cut at a further processing site to a chopped wood size and split. Cutting and splitting may occur either in a single operation or in separate operations. In the method using a raw material in the class of heavy-duty pulpwood, the 3 m long tree trunks can be cut, whenever necessary for easier handling, in the vicinity of a chopped wood production site for shorter lengths, e.g. to the length of 1 m.

In the production of chopped wood, the most traditional, still employed method is the cutting of a brushwood stem or "block", e.g. with an electric-motor driven circular chopping saw, to a length size required by the chopped-wood burning furnace. This is followed by subjecting each severed block to a treatment for splitting. In its most elementary form, the splitting can be performed with an axe or alternatively by employing a hydraulically operated splitting mechanism, which can take up its drive from an electrically powered, integrated aggregate or e.g. from the hydraulics of a tractor. In the splitting mechanism, the tree to be split is pushed by a ramhead-equipped hydraulic cylinder against a counter knife, which effects the splitting. The counter knife can be e.g. straight or grill-shaped in configuration, whereby the splitting produces two or more pieces.

The more advanced equipment for cutting and splitting is represented by chopping and splitting machines powered by an electric motor, the power take-off or hydraulics of a tractor, which may be of a mobile tractor-compatible model or operating in a stationary position. The mechanisms are divided into two main categories, which are machines with a concurrent chopping and splitting action, as well as equipment in which these actions are designed to proceed one after the other. The simultaneously chopping and splitting equipment includes usually a rotationally or reciprocally driven knife unit, which by way of its design effects both splitting and chopping actions. After these procedures, the piece of firewood or chopped wood ends up on a conveyor which delivers the goods e.g. onto a pile-up or onto the platform of a nearby vehicle. A typical construction in simultaneously chopping and splitting machines is a knife unit, which severs the tree in a guillotine style. The guillotine action is preceded by having the tree penetrated by a wedge-like spike, which is included either in the mobile guillotine knife or in the static counter knife and which splits the tree.

An advantage offered by the implementation described above in principle is the simplicity of construction and, if necessary, a high-speed action. What may be regarded as a downside by some of the users is a slightly rough crosscut surface. In equipment with separate chopping and splitting actions, the chopping is generally effected by means of a circular type of chopping saw or a motor-driven type of chain saw. After the cutting, the tree falls into a chute or the like which is provided with a hydraulic splitting unit (as described above). After the splitting action, the tree ends up on a conveyor exactly the same way as in a machine described above in reference to the other principle.

In all foregoing solutions of producing chopped wood, including mechanized solutions, problems may be caused by handling a tree to chopped up. Brushwood stems or larger trunks are often heavy to handle. As a solution to this problem, feeding tables and feeding equipment are currently available for several machine types. E.g. a grab loader can be used for mechanically lifting a bunch of brushwood stems onto the feeding table. The feeding table is equipped with devices facilitating the passage of brushwood stems to the process.

The delivery of a piece of brushwood to chopping and splitting is also often mechanized nowadays. The piece of brushwood or another tree to be processed is conveyed into a feeding chute, wherein the tree is delivered to chopping by feeding elements at the rate of its advancement.

Examples of above discusses solutions are disclosed especially in following publications: US-A-4398581, which discloses a system in accordance with the preamble of claim 1, WO-A-2005/043983, FR-A-2819212 and US-A-6135175.

A conclusion which can be drawn from the foregoing is that the currently employed logistic chains involved in the production of chopped wood are quite meandering and include plenty of operations. Especially the chain based on the use of brushwood involves also a considerable number of strenuous and expensive physical operations, which often in practice undermines the motive for early thinning operations of seeding stands and young-growth forests. The simplification and mechanization of the entire chain would provide considerable benefits, including a quicker metamorphosis of timber from roundwood to chopped wood. The time from the felling of a tree to its splitting operation should be minimizable, such that the drying of wood can start quickly and the damage inflicted by fungi and pests to the felled tree can be maintained minimal.

An objective of the present invention is to expedite and in logistic sense to simplify the harvesting and processing chain of timber intended for chopped wood, such that an upright growing tree (alternatively e.g. a storm-crashed tree) can be processed into chopped wood in the tree's habitat. As a result, the process produces chopped wood which, in an optimal case, towards the end of the process has become loaded on a trailer, in a container, in a cage or the like, in which it can be either shipped straight to a customer or left or removed for drying, depending on a drying method. In a preferred case, the container or cage is built to enable drying therein.

In order to achieve the above objective, the present invention is characterized in that the equipment for delimbing branches of the tree includes at least one delimbing knife whose working motion is linked to a splitting member of the means for splitting the trunk of the felled tree.

With the apparatus or mechanism of the invention a tree is felled, delimbed, chopped and split after grabbing an initial hold of the standing tree, such that the tree is not at all temporarily stored, laid on the ground, in a loading space or the like, during the on-going process. This is possible because the mechanism features an ingeniously and in a novel inventive manner created combination of elements needed for various operations of the process. In addition to the operations described above, the mechanism may also feature a tree measurement for information about the processed volume. If desired, this information can be made available as per types of timber (calls for dial tapping on the part of the machine operator).

Exemplary embodiments according to the invention and details thereof will now be described more specifically with reference to the accompanying drawings, in which:
- Fig. 1: shows a chopped-wood harvester head of the invention attached to the boom of a grab loader and implemented on an impulse harvester principle,
- Fig. 2: shows the harvester head of fig. 1 with delimbing in progress,
- Fig. 3: shows a second embodiment of the invention,
- Fig. 4: shows a third embodiment not forming part of the invention,
- Fig. 4A: shows an optional design for the third embodiment, and
- Fig. 5: shows a fourth embodiment not forming part of the invention.

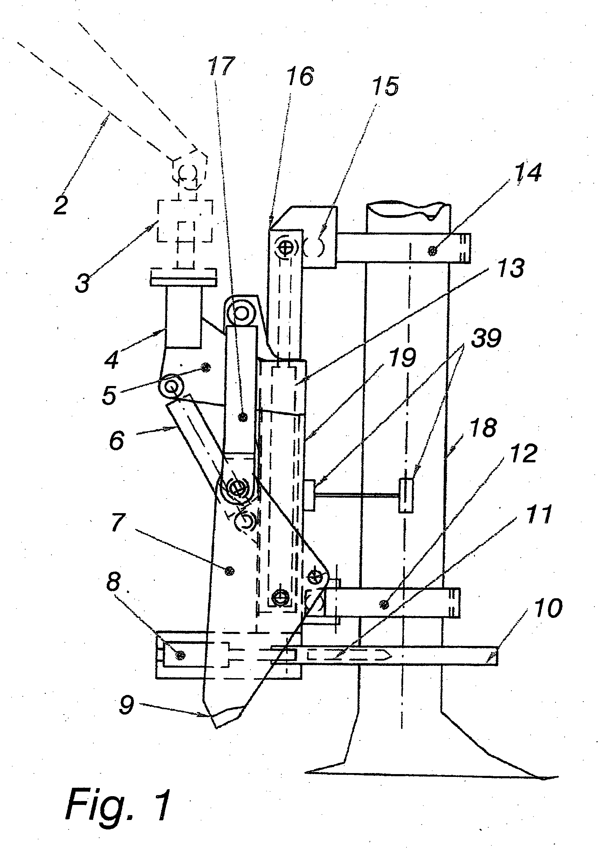

Fig. 1 shows a chopped-wood harvester head of the invention, implemented on an impulse harvester principle, which is attached to a grab loader boom 2 and to a rotator 3 in association therewith and producing a rotary motion relative to a vertical axis. The joint is made by means of an attachment element and flange 4. In fig. 1, the chopped-wood harvester is in a position preceding the felling of a growing tree 1. A bracket body 5 and an impulse member body 19 are co-directional with a cylinder 6 withdrawn to its retracted position. A splitting member body 7, to which an actual splitting member 9 is attached, is in a position pulled off a line of the tree 1 by means of a cylinder 17 (one or more). The splitting member 9 is for example a riving knife.

Prior to the felling process, the tree 1 is approached in such a way that delimbing clamps 14 functional as delimbing members, as well as holding clamps or tools 12, are open. The opening, closing, and possibly also the retaining pressure thereof are controlled hydraulically by means of cylinders 15. In the exemplary case of fig. 1, the harvester head is depicted as being provided with a so-called guillotine cutting feature, including a knife 11 cutting across the tree 1, as well as a counter clamp 10 which is also open in the process of approaching the tree 1 to be felled. During the chopping, the counter clamp 10 and at least the delimbing clamp 14 are in closed positions. A hydraulic cylinder 8 (one or more), operating the chopping knife 11, drives the knife 11 and the tree 1 is severed.

The figure depicts symbolically also measuring wheels 39 used for measuring a lengthwise movement of the tree and the diameter of a tree 18.

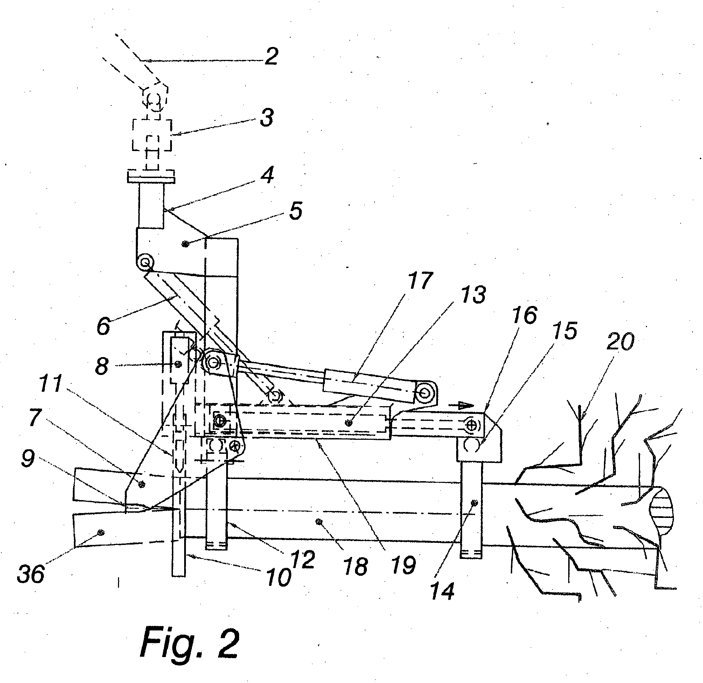

Fig. 2 shows the harvester head of fig. 1 in a condition, in which the tree 18 is in a felled position and the delimbing is in progress. The felling is controlled by means of a cylinder 6 (one or more). In the delimbing process of fig. 2, a cylinder 13 urges to extend a telescope 16 and the delimbing knives 14 are in a loose delimbing fit. The delimbing members or knives 14 adapt themselves to a trunk diameter of the tree 18 and have a sharpening feature ahead of themselves. The members 14 remove branches 20 from the tree 18. During the course of delimbing, the tree is held firmly in a stationary position by the holding tools 12. Once the telescope 16 has executed its extension, the delimbing knives 14 squeeze tightly against the tree in response to a hydraulically driven mechanism 15. The holding tools 12 loosen their grip on the tree 18. The holding tools 12 are controlled by a hydraulically driven mechanism 15 substantially similar to the one controlling the delimbing knives 14. The riving knife 9, which is secured to the riving knife body 7, is pivoted by means of a hydraulic cylinder 17 into an alignment with the centre axis of the felled tree 18.

After the felling or severing, the chopping knife 11 is in a retracted position and the counter clamp 10 is loosely around the tree 18. As the cylinder 13 manipulating the telescope 16 is in the process of retracting, the tree 18 is moving to the left in the figure towards the riving knife 9. The figure illustrates a length of wood or a block, which has been split by the riving knife 9 and which has almost split into pieces of chopped wood 36.

Once the cylinder 16 has executed an inward stroke of desired length, the counter clamp 10 and possibly also the holding clamp 12 shall tighten. At the same time, the chopping knife 11 executes a cutting action by means of the cylinder 8. After the cutting operation, the ready-to-use pieces of chopped wood 36 fall from the apparatus into a desired location or alternatively the fall occurs as a consequence of the next movement of the tree 18, as shown in fig. 2, depending on the construction and selected dimensions of the apparatus.

The cylinder 13 can have its stroke controlled either by the machine operator manually setting up mechanical restrictions (not shown in the figure) or by measuring, e.g. by means of electronics, a stroke of the cylinder 13 or the telescope 16 associated therewith. These stroke adjustment capabilities are used for establishing the length of resulting chopped wood.

The exemplary apparatus of fig. 2 can be used as a conventional impulse harvester as the counter knife and its body 9, 7 are in a position offset by means of the cylinder 17 out of the movement range of the tree 18, i.e. to the position in which the counter knife and the body 9, 7 are located during a tree felling operation.

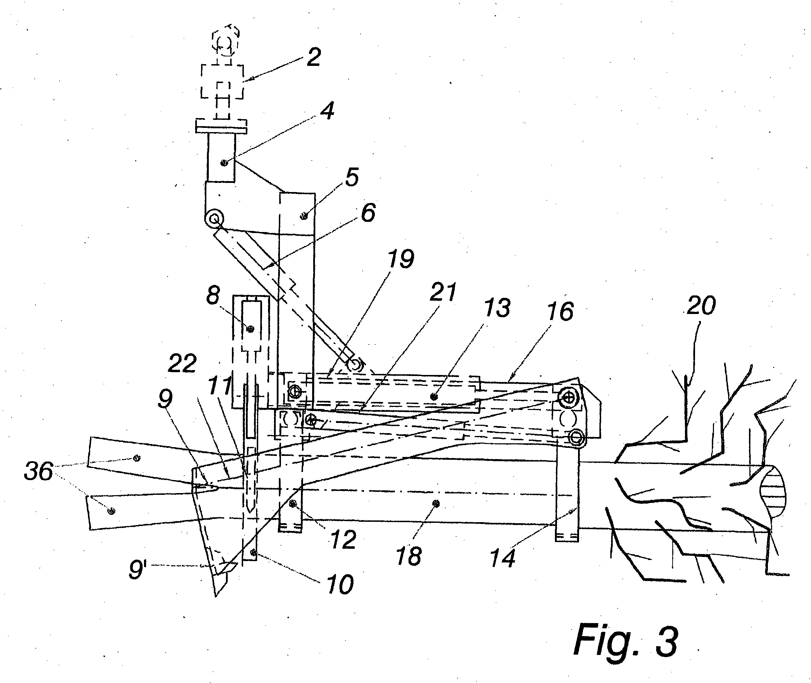

Fig. 3 shows a preferred exemplary embodiment, wherein a riving knife 9, 9' is attached to a riving knife body 22 which travels along with the movement of a telescope 16 effected by a cylinder 13. The riving knife 9 or 9' can be shifted into alignment with the splitting line by repositioning the body 22 by means of a cylinder 21. The same way as shown also in the example of figs. 1-2, the riving knife 9, 9' is in an offset position during a felling operation to enable the felling. The felling process is controlled the same way as in the example of figs. 1-2.

In the example of fig. 3, it is possible to select the riving knife 9, which splits a tree 18 into two lengthwise segments, or the other riving knife 9' capable of splitting the tree 18 into e.g. three or four segments. Since the tree 18 has a diameter which is larger in the butt portion than towards the top, it may be necessary to switch the riving knife 9, 9' in the middle of processing the tree 18. This can be effected either manually by changing the length of the hydraulic cylinder 21 or by a more sophisticated measurement and automation technological solution, in which a measuring device (a separate measuring device or a measuring device coupled with clamps 12, 14) delivers an impulse to a control system which either notifies the operator about the necessity of switching the knife 9, 9' or performs the switch automatically.

A substantial functional difference in the solution of fig. 3 compared to that of figs. 1-2 involves the timing of a splitting operation as the process progresses. In the example of fig. 3, the splitting occurs simultaneously with the delimbing operation, while in the example of fig. 2 the tree 18 is split during its advancement. This difference, of course, has its logical influences on the timings regarding the action of delimbing, holding and counter clamps 14, 12, 10 as well as a chopping knife 11.

A first cycle of the process after the felling operation begins with the holding clamp 12 tightly around the tree 18 and the delimbing knife 14 in the process of delimbing as the telescope 16 is extending. At this point, the riving knife 9, 9' is set in alignment with the centre axis of a trunk of the tree 18, but there is no material to be split within reach of the knife 9,9' as yet. Next, the grip of the holding clamp 12 is loosened and at this point, at the latest, the chopping knife 11 rises out of the line of an advancing movement of the tree 18 parallel to the trunk. The delimbing knife 14 grips a firm hold of the tree 18 and advances it over a desired distance to the left in the figure. The desired distance is for example a desired length of the chopped wood 36.

In the next step, the chopping knife 11 is pressed by means of the hydraulic cylinder 8 inside the tree 18 in such a way that the tree 18 is left just short of being severed. The delimbing knife 14 is moved to the right for delimbing a certain length of the tree 18 and at the same time the riving knife 9, 9' splits the almost severed section of the tree 18 over the entire length of the piece of firewood 36 or at least almost over that length. Depending on the construction or the user's choice, the chopping knife 11 may cut the almost severed section of the tree 18 completely off and pull itself up again after that, or it can pull itself up during the course of splitting. The optimum mode of operation depends, among other things, on the properties of a particular type of wood. The final result is that the pieces of chopped wood 36 fall off the tree 18. The next cycle corresponds to the above-described 2nd cycle.

The apparatus shown in the example of fig. 3 can also be used the same way as a conventional impulse harvester without splitting a tree 18 by keeping a riving knife body 22 away from the range of movement of the tree 18 during the course of processing.

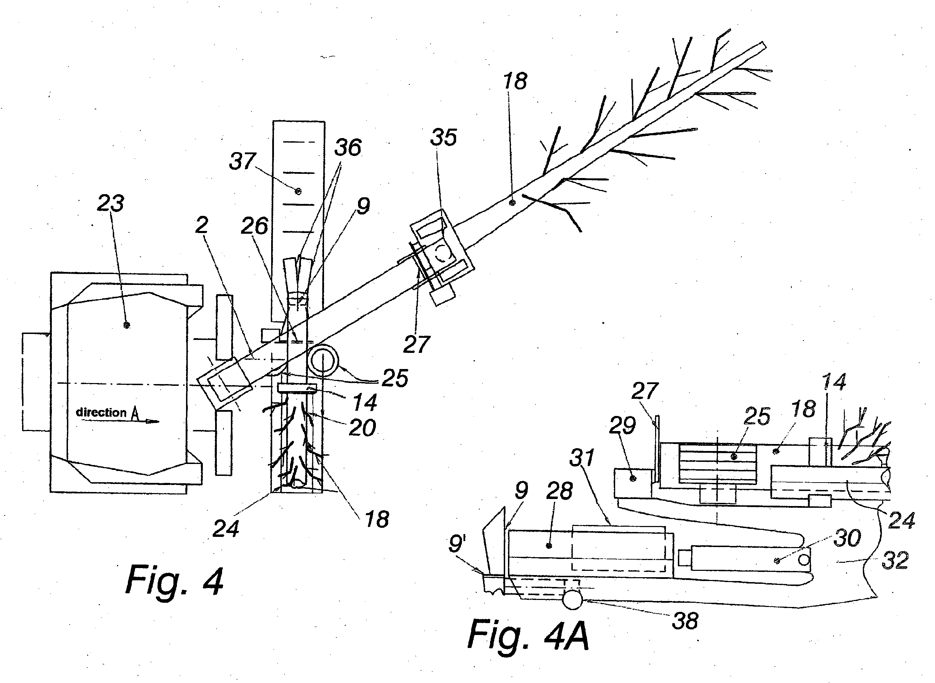

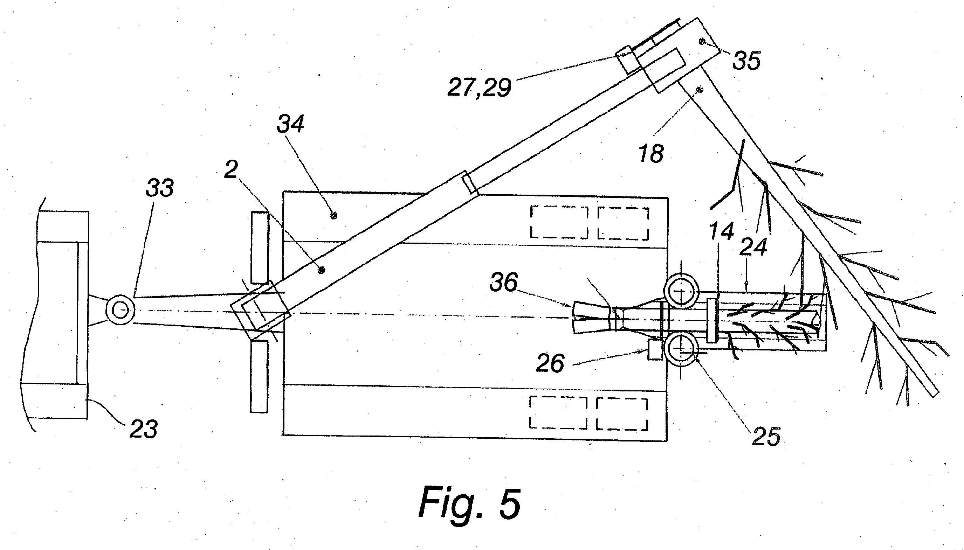

The following embodiments shown in figures 4 and 5 does not form part of the invention. They only represents background art useful understanding the invention.

Fig. 4 illustrates an apparatus design, comprising a tractor 23, a grab loader 2 mounted thereon, which is provided with a so-called logging clamp 35, as well as with a feeding table 24, delimbing knives 14, feed rollers 25, a chopping device 26, riving knives 9 (9' is not visible in fig. 4), and a conveyor 37. In the basic design option, the logging clamp 35 is adapted to grab a tree to be felled, which is severed at the butt by means of a cutting device 27. A felled tree 18 is lifted onto the feeding table 24 in a way that the feed rollers 25 are able to grasp a hold of the butt. A distance of the feed rollers 25 from each other is variable and depends on a diameter of the tree 18 to be processed. The feed rollers 25 are biased mechanically or hydraulically against a surface of the tree 18 for providing a solid grip. Monitoring rotations of and a relative spacing between the feed rollers 25 with sensors enables performing a volume determining measurement on timber.

The feed rollers 25 are used for pulling the tree 18 through the delimbing knives 14 and against the riving knife 9(9'). A length of the feed rollers 25 can be established by means of a control system or adjustable detents (not shown) applied to the tree for defining the length of resulting chopped wood. The chopping device 26, which can be of any conventional type (chain saw, circular saw, guillotine), cuts the tree 18 at appropriate intervals while the feed rollers 25 are in a standstill. From the chopping device 26 and the riving knife 9(9'), the chopped wood falls onto the conveyor 37 for loading the chopped wood e.g. in a cage.

Fig. 4A illustrates an embodiment optional to the preceding one, in which the delimbing and the splitting can be effected simultaneously. A delimbed and severed block 31 falls from a chopping device 27, 29 into a splitting chute 28. Feeding, delimbing, chopping, and riving tools 25, 14, 27, 29, 28, 30, 9, 9' are mounted on a single body 32. The block 31 is pushed against a riving knife 9, 9' by a cylinder 30. Alternatively, the riving knife 9, 9' can be mounted on a moving part of the cylinder 30, which pushes the block 31 against a detent (not shown in the figure).

In the example, the riving knife 9, 9' is provided with a switching device 38, e.g. a small hydraulic cylinder, which can be used for selecting a desired riving knife 9 or 9'. From the splitting operation, the chopped wood proceeds onto the conveyor 37 as shown in fig. 4. In the embodiments shown in figs. 4 and 4A, the logging can be effected simultaneously with other processing, thus improving the productivity of work. In an alternative design, the time claimed by a splitting operation is also interlaced with the rest of the process, which provides even more efficiency.

Fig. 5 shows yet another optional solution, in which a grab loader 2, equipped with a logging clamp 35, is coupled with an all-terrain trailer 34 outfitted with equipment to produce chopped wood. Even in this case, the grab loader 2 can be alternatively coupled with a tractor 23, to which the trailer 34 is hitched anyway. In the example of fig. 5, a delimbing, chopping and splitting, chopped-wood producing apparatus is coupled with a rear part of the trailer 34, being conveniently coupled therewith in an easily disengageable manner and, because of road traffic, in an articulated manner to enable swinging it up on top of the load-carrying space of the trailer 34 for the duration of transport.

A tree 18 felled by means of the logging clamp 35 is lifted into a feeding chute 24. The delimbing, chopping and splitting operations can proceed as described in the examples of fig. 4. The chopped wood falls into the load-carrying space of the trailer 34, which can be continuous, provided with a tipping mechanism, or which load-carrying space may include e.g. holding cages or containers, which can be lifted and lowered down by means of the loader 2 or otherwise out of the trailer 34 and used as a drying and storage facility for the chopped wood.

The illustrated embodiments can have relevant conventional technology combined therewith. In a chopping operation, for example, any of the exemplary embodiments can be implemented by using per se known alternative chopping equipment. Likewise, whenever desirable, the motion of a riving knife 9, 9' can be controlled by means of a separate actuator 30 with modifications to the exemplary embodiments of figs. 1-3. The illustrated examples do not exclude the possibility of practicing the invention in constructive solutions or assemblies other than those described above.

Measuring and automation units are not presented in the figures with the exception of a measuring sensor symbol 39 visible in fig. 1. A measurement for the diameter size and the advanced length of a tree to be processed can be effected by using per se known methods, such as e.g. measuring wheels or the like. In an impulse option, it is possible to measure and control the movement of a telescope 16. In many instances, the working cycle can be automated as desired. The given setup value comprises the length of chopped wood and possibly threshold values for the cross-sectional size of chopped wood 36, which enables the utilization of the above-described automatic splitting into two or more segments depending on the diameter of a tree 18.

Volume calculation can also be effected by using prior known, commercially available methods.

## Claims

1. A working machine system, including equipment (11) for felling a tree (18) to be processed, equipment (14) for delimbing branches (20) of the tree (18), and wherein the equipment (11) for felling the tree is also equipment (11) for cutting the tree trunk to a desired length, and the working machine system includes equipment for producing chopped wood, said equipment including means (9, 9') for splitting a trunk of the felled tree (18) in a longitudinal direction of the tree, wherein the equipment (11) for cutting the tree trunk are also chopping means (11) for cutting the split parts of the tree trunk to a length marching that of chopped wood, and **characterized in that** the equipment (14) for delimbing branches (20) of the tree (18) includes at least one delimbing knife whose working motion is linked to a splitting member of the means (9, 9') for splitting the trunk of the felled tree (18).

2. A working machine system as set forth in claim 1, **characterized in that** the working machine system is adapted to split a trunk of the tree (18) by means of actuators (13, 25, 30) capable of producing a relative movement between the trunk of the tree (18) and the riving knife (9, 9').

3. A working machine system as set forth in claim 1 or 2, **characterized in that** it includes means (25, 12, 14) for aligning the processed tree (18) in a working direction of the riving means (9, 9') in the process of splitting the tree (18).

4. A working machine system as set forth in any of the preceding claims 1-3, **characterized in that** the riving knife (9, 9'), operated by the actuator (30, 25, 13), splits the tree (18) over a desired length while the tree (18) remains stationary.

5. A working machine system as set forth in any of the preceding claims 1-4, **characterized in that** a position of the riving means (9, 9') relative to a path of the tree (18) is shiftable by means of an actuator (21).

6. A working machine system as set forth in any of the preceding claims 1-5, **characterized in that** the riving means (9, 9') are adjustable in such a way that the tree (18, 31), subjected to riving, splits up to a desired point in the longitudinal direction.

7. A working machine system as set forth in any of the preceding claims 1-6, **characterized in that** it includes sensors for repeatedly identifying a diameter of the tree (18), on the basis of which the operator is advised to change a setup of the riving knife (9', 9) and/or the knives (9, 9') are guided directly by means of a control system.

8. A working machine system as set forth in any of the preceding claims 1-7, **characterized in that** it is connected to the boom of a grab loader (2) or to an adapter serving as its extension.

9. A working machine system as set forth in any of the preceding claims 1-8, **characterized in that** it is provided with means (39) measuring a trunk length and diameter of the supplied tree (18), as well as with a volume measuring system based on the data provided by these means.

10. A machine system as set forth in claim 9, **characterized in that** the volume measuring is provided for various species of wood based on the choice made by a person operating the machine.

11. A machine or a machine system as set forth in any of the preceding claims 1-10, **characterized in that** the length of resulting chopped wood (36) is adjustable by adjusting the distance corresponding to a single shift of the feeding means (13, 25) or by adjusting the number of successive shifts between the chopping operations or by combining both fashions.

## Patentansprüche

1. Arbeitsmaschinensystem mit Ausrüstung (11) zur Fällung eines weiterzuverarbeitenden Baums (18), Ausrüstung (14) zum Entasten von Ästen (20) des Baums (18), und wobei die Ausrüstung (11) zum Fällen des Baums außerdem Ausrüstung (11) zum Schneiden des Stamms auf eine gewünschte Länge ist, und wobei das Arbeitsmaschinensystem außerdem Ausrüstung (11) zum Erzeugen von gehacktem Holz enthält, wobei die Ausrüstung Mittel (9, 9') zum Aufteilen eines Stamms des gefällten Baums (18) in einer Längsrichtung des Baums enthält, wobei die Ausrüstung (11) zum Schneiden des Stamms außerdem Hackmittel (11) zum Schneiden der aufgeteilten Teile des Baumstamms auf eine Länge beinhaltet, die jener von gehacktem Holz entspricht, und **dadurch gekennzeichnet, dass** die Ausrüstung (14) zum Entasten von Ästen (20) des Baums (18) zumindest ein Entastungsmesser enthält, dessen Arbeitsbewegung mit einem Aufteilmittel der Mittel (9, 9') zum Aufteilen des Stamms des gefällten Baums (18) verknüpft ist.

2. Arbeitsmaschinensystem nach Anspruch 1, **dadurch gekennzeichnet, dass** das Arbeitsmaschinensystem dazu geeignet ist, einen Stamm des Baums (18) mithilfe von Stellgliedern (13, 25, 30) aufzuteilen, die dazu imstande sind, eine relative Bewegung zwischen dem Stamm des Baums (18) und dem Spaltkeil (9, 9') zu erzeugen.

3. Arbeitsmaschinensystem nach einem der Ansprüche 1 oder 2, **dadurch gekennzeichnet, dass** es Mittel (25, 12, 14) zum Ausrichten des verarbeiteten Baums (18) in einer Arbeitsrichtung der Spaltmittel (9, 9') im Prozess des Aufteilens des Baums (18) enthält.

4. Arbeitsmaschinensystem nach einem der vorhergehenden Ansprüche 1 bis 3, **dadurch gekennzeichnet, dass** der Spaltkeil (9, 9'), der durch das Stellglied (30, 25, 13) betrieben ist, den Baum (18) über eine gewünschte Länge hinweg aufteilt, während der Baum (18) unbeweglich verbleibt.

5. Arbeitsmaschinensystem nach einem der vorhergehenden Ansprüche 1 bis 4, **dadurch gekennzeichnet, dass** eine Position des Spaltmittels (9, 9') bezüglich eines Wegs des Baums (18) mithilfe eines Stellglieds (21) verschiebbar ist.

6. Arbeitsmaschinensystem nach einem der vorhergehenden Ansprüche 1 bis 5, **dadurch gekennzeichnet, dass** die Spaltmittel (9, 9') derart einstellbar sind, dass der Baum (18, 31), der dem Spalten unterzogen ist, sich an einem gewünschten Punkt in der Längsrichtung aufteilt.

7. Arbeitsmaschinensystem nach einem der vorhergehenden Ansprüche 1 bis 6, **dadurch gekennzeichnet, dass** es Sensoren zum wiederholten Identifizieren eines Durchmessers des Baums (18) enthält, wobei auf dieser Grundlage der Bediener darauf hingewiesen ist, eine Einstellung des Spaltkeils (9, 9') zu ändern, und/oder die Keile (9, 9') direkt mithilfe eines Steuersystems geführt sind.

8. Arbeitsmaschinensystem nach einem der vorhergehenden Ansprüche 1 bis 7, **dadurch gekennzeichnet, dass** es mit dem Ausleger einer Greifladevorrichtung (2) oder mit einem Verbindungsteil verbunden ist, das als seine Erweiterung dient.

9. Arbeitsmaschinensystem nach einem der vorhergehenden Ansprüche 1 bis 8, **dadurch gekennzeichnet, dass** es mit Mitteln (39), die eine Stammlänge und einen Stammdurchmesser des zugeführten Baums (18) messen, sowie mit einem Volumenmesssystem versehen ist, das auf den Daten basiert, die von diesen Mitteln vorgesehen sind.

10. Arbeitsmaschinensystem nach einem der vorhergehenden Ansprüche 1 bis 9, **dadurch gekennzeichnet, dass** die Volumenmessung für verschiedene Holzarten auf Grundlage der Wahl vorgesehen ist, die eine Maschinenbedienungsperson trifft.

11. Arbeitsmaschinensystem nach einem der vorhergehenden Ansprüche 1 bis 10, **dadurch gekennzeichnet, dass** die Länge von resultierendem gehackten Holz (36) durch Einstellen des Abstands, der einer einzelnen Verschiebung des Zufuhrmittels (13, 25) entspricht, oder durch Einstellen der Anzahl aufeinanderfolgender Verschiebungen zwischen den Hackvorgängen oder durch Kombinieren beider Modi einstellbar ist.

## Revendications

1. Système de machine de travail, incluant un équipement (11) pour abattre un arbre (18) à traiter, un équipement (14) pour ébrancher les branches (20) de l'arbre (18), l'équipement (11) pour abattre l'arbre étant aussi un équipement (11) pour couper le tronc de l'arbre à une longueur souhaitée et le système de machine de travail incluant un équipement pour produire du bois débité, ledit équipement incluant un moyen (9, 9') pour fendre un tronc de l'arbre abattu (18) dans le sens longitudinal de l'arbre, l'équipement (11) pour couper le tronc de l'arbre étant aussi un moyen de débitage (11) pour couper les parties fendues du tronc d'arbre à une longueur correspondant à celle du bois coupé, et **caractérisé en ce que** l'équipement (14) pour ébrancher les branches (20) de l'arbre (18) comprend au moins une lame d'ébranchage dont le mouvement de travail est lié à un moyen (9, 9') pour fendre le tronc de l'arbre abattu (18).

2. Système de machine de travail selon la revendication 1, **caractérisé en ce que** le système de machine de travail est apte à fendre un tronc de l'arbre (18) au moyen d'actionneurs (13, 25, 30) capables de produire un mouvement relatif entre le tronc de l'arbre (18) et la lame fendeuse (9, 9').

3. Système de machine de travail selon la revendication 1 ou 2, **caractérisé en ce qu'**il comprend un moyen (25, 12, 14) pour aligner l'arbre traité (18) dans un sens de travail du moyen fendeur (9, 9") dans le processus de débitage de l'arbre (18).

4. Système de machine de travail selon l'une quelconque des revendications précédentes 1 à 3, **caractérisé en ce que** la lame fendeuse (9, 9') actionnée par l'actionneur (30, 25, 13) fend l'arbre (18) sur une longueur souhaitée pendant que l'arbre (18) reste stationnaire.

5. Système de machine de travail selon l'une quelconque des revendications précédentes 1 à 4, **caractérisé en ce qu'**une position du moyen fendeur (9, 9') par rapport à un parcours de l'arbre (18) est permutable au moyen d'un actionneur (21).

6. Système de machine de travail selon l'une quelconque des revendications précédentes 1 à 5, **caractérisé en ce que** le moyen fendeur (9, 9') est ajustable de manière à ce que l'arbre (18, 31) soumis au débitage se fende à un point souhaité dans le sens longitudinal.

7. Système de machine de travail selon l'une quelconque des revendications précédentes 1 à 6, **caractérisé en ce qu'**il inclut des capteurs pour identifier à répétition un diamètre de l'arbre (18) à partir duquel l'opérateur est invité à changer un montage de la lame fendeuse (9, 9') et/ou les lames (9, 9') sont guidées directement au moyen d'un système de commande.

8. Système de machine de travail selon l'une quelconque des revendications précédentes 1 à 7, **caractérisé en ce qu'**il est connecté à la flèche d'un chargeur à pince (2) ou à un adaptateur permettant son extension.

9. Système de machine de travail selon l'une quelconque des revendications précédentes 1 à 8, **caractérisé en ce qu'**il est pourvu d'un moyen (39) mesurant une longueur de tronc et le diamètre de l'arbre acheminé (18), de même que d'un système de mesure de volume se basant sur les données fournies par ce moyen.

10. Système de machine de travail selon la revendication 9, **caractérisé en ce que** la mesure de volume est assurée pour diverses essences de bois à partir de la sélection faite par une personne faisant fonctionner la machine.

11. Système de machine de travail selon l'une quelconque des revendications précédentes 1 à 10, **caractérisé en ce que** la longueur du bois débité résultant (36) est ajustable en ajustant la distance correspondant à un passage simple du moyen d'alimentation (13, 25) ou en ajustant le nombre de passages successifs entre les opérations de débitage ou en combinant les deux modes.
